# FASCICULE DE BREVET EUROPEEN

(11) **EP 1 387 111 B1**
(45) Date de publication et mention de la délivrance du brevet: **21.12.2005**
(21) Numéro de dépôt: 03291891.4
(22) Date de dépôt: 30.07.2003
(51) Int. Cl.: F16F 13/16

(54) **Support élastique à amortissement hydraulique**
Hydraulisch gedämpftes elastisches Lager
Hydraulically damped elastic mount

(30) Priorité: 31.07.2002 ES 200201805
(43) Date de publication de la demande: 04.02.2004
(73) Titulaire: Caucho Metal Productos, S.L., 26006 Logrono (ES); ADAM OPEL AG, 65423 Rüsselsheim (DE)
(72) Inventeur: Royo Lucia, Jose Vicente, 26001 Logroño (ES); Higueras Sanz, Jose M., 26006 Logroño (ES); Vogt, Armin, 64347 Griesheim (DE)
(74) Mandataire: Intes, Didier Gérard André

(56) Documents cités:
- EP-A- 0 754 877
- US-A- 5 088 703
- PATENT ABSTRACTS OF JAPAN vol. 1999, no. 13, 30 novembre 1999 (1999-11-30) & JP 11 230239 A (KINUGAWA RUBBER IND CO LTD), 27 août 1999 (1999-08-27)
- PATENT ABSTRACTS OF JAPAN vol. 2000, no. 26, 1 juillet 2002 (2002-07-01) & JP 2001 241490 A (TOYO TIRE & RUBBER CO LTD), 7 septembre 2001 (2001-09-07)

## Description

La présente invention se réfère à un support de type à amortissement hydraulique et destiné au bras de commande des véhicules automobiles, doté d'une capacité de comportement élastique axial et radial, la disposition de ses composants lui conférant la particularité d'annuler l'amortissement en direction axiale, à partir d'une déformation radiale déterminée.
Les supports élastiques à amortissement hydraulique en direction axiale sont déjà connus, il existe déjà des réalisations avec passage intérieur d'un fluide entre deux chambres, comme dans les brevets US 4877262, US 5005810 et EP 0386735, ainsi que des réalisations avec passage du fluide par un conduit extérieur entre les chambres de l'amortisseur tel que dans les brevets US 4739979, EP 0754877, EP 0458088 et DE 4015523. En particulier, le brevet EP 0 754 877 décrit un amortisseur présentant les caractéristiques du préambule de la revendication 1. Les solutions connues de tels amortisseurs présentent toutefois une réalisation et un montage complexes, en outre elles peuvent s'avérer déficientes dans certains aspects de l'amortissement.

Grâce à l'objet de la présente invention, il est possible d'obtenir une solution très avantageuse, au moyen d'un support élastique de géométrie simple, capable de répondre linéairement aux sollicitations dans une direction à la fois radiale et axiale, étant amorti hydrauliquement en direction axiale et capable d'annuler ledit amortissement hydraulique à partir d'une déformation déterminée en direction radiale, tout cela avec une réalisation de construction très simple et facile à monter.

Ledit support objet de l'invention est défini par la revendication 1, et comporte un noyau élastique moulé en matériau élastomère, incluant deux inserts annulaires de renfort et une douille cylindrique centrale associés audit matériau, sur ledit noyau sont incorporées deux pièces semi-cylindriques complémentaires, entre ces pièces et le noyau sont définies deux chambres annulaires séparées par une membrane du noyau, tandis que sur l'ensemble de pièces semi-cylindriques est incorporée une structure cylindrique extérieure, entre cette structure et au moins une des pièces semi-cylindriques est défini un conduit labyrinthique qui communique avec les chambres annulaires précitées, la totalité du volume des chambres annulaires mentionnées et le conduit labyrinthique étant remplis de liquide amortisseur.

On obtient ainsi un support élastique dans lequel la membrane du noyau reste radialement en contact avec l'intérieur des pièces semi-cylindriques, avec une certaine pression et en appui coulissant sur lesdites pièces, et dans lequel les deux chambres séparées par la membrane restent isolées l'une de l'autre, une communication entre elles étant seulement établie à travers le conduit labyrinthique extérieur.

Ainsi, lorsque la douille intérieure du noyau est déplacée en direction axiale par rapport à la structure extérieure de l'ensemble, un changement de volume des chambres séparées par la membrane du noyau est généré, ce qui pompe le liquide intérieur d'une chambre à l'autre à travers le canal labyrinthique extérieur et produit un amortissement de l'effort dû au déplacement relatif indiqué.

La nature du matériau élastomère composant du noyau fait que l'ensemble offre en outre une élasticité en direction radiale, avec la particularité que, étant donné la disposition du montage, à partir d'une déformation déterminée en sens radial, les deux chambres contenant du liquide amortisseur restent directement en communication l'une avec l'autre, grâce à la séparation de la membrane par rapport aux pièces semi-cylindriques, par la partie d'où provient l'effort radial, annulant ainsi l'amortissement axial que provoquait le passage forcé du liquide entre les deux chambres à travers le conduit labyrinthique extérieur.

Le montage des éléments composants du support s'effectue dans un liquide amortisseur, par exemple du glycol, avec lequel tous les creux intérieurs de l'ensemble monté sont complètement remplis et grâce au montage avec fermeture vers l'intérieur des extrémités de la structure extérieure, le liquide reste confiné à l'intérieur du support, sans s'échapper vers l'extérieur.

L'ensemble du support monté se comporte comme n'importe quelle pièce de caoutchouc-métal, c'est-à-dire élastiquement en cas de mouvement de la partie intérieure par rapport à la partie extérieure, en direction radiale, axiale, conique, de torsion ou une combinaison des précédentes. Grâce à l'élastomère existant, la douille centrale du noyau et les renforts annulaires de celle-ci restent fermement montés par rapport à la structure extérieure. Les propriétés élastiques de l'ensemble peuvent être modifiées en changeant la géométrie ou les caractéristiques de l'élastomère utilisé, ou bien en modifiant la disposition et la géométrie des éléments composants associés à l'élastomère.

Par conséquent, le support génère un amortissement important lorsqu'un déplacement en direction axiale de la partie intérieure par rapport à la partie extérieure se produit, de sorte que ledit mouvement se transmet à travers la membrane qui sépare les deux chambres contenant le liquide amortisseur, modifiant le volume desdites chambres, avec un pompage du liquide amortisseur d'une chambre à l'autre à travers le conduit labyrinthique extérieur, ce qui génère l'amortissement.

La membrane du noyau reste appuyée contre la partie interne des pièces semi-cylindriques avec une pression déterminée ; ceci permet d'une part de parvenir à maintenir les deux chambres isolées l'une de l'autre sans empêcher la déformation élastique de la membrane et son coulissement sur l'extérieur des pièces semi-cylindriques mentionnées, et d'autre part qu'en cas de sollicitation en direction radiale, la pression de l'appui de la membrane sur les pièces semi-cylindriques augmente d'un côté et diminue de l'autre, de manière à ce qu'à partir d'un déplacement déterminé dans un sens, la membrane ne soit plus en contact avec les pièces semi-cylindriques, provoquant ainsi une communication directe entre les deux chambres et annulant l'effet amortisseur axial du passage du liquide par le conduit labyrinthique extérieur. En fonction de la pression dans le montage entre la membrane du noyau et les pièces semi-cylindriques, l'effort radial permettant d'annuler l'amortissement axial peut être plus ou moins important.

Les propriétés dynamiques du support peuvent s'ajuster en modifiant la conception des parties et éléments composants, étant donné que ces propriétés dynamiques dépendent des propriétés élastiques des parois des chambres contenant le liquide amortisseur, de l'efficacité du pompage de la membrane entre les chambres, de la pression de ladite membrane contre l'intérieur des pièces semi-cylindriques et des propriétés rhéologiques du liquide amortisseur. Les propriétés élastiques des parois des chambres s'ajustent en changeant leur géométrie, leur matériau et leurs renforts internes. L'efficacité du pompage se modifie en faisant varier le diamètre de la membrane du noyau. L'efficacité de l'amortissement peut se modifier en changeant la section et la longueur du conduit labyrinthique. La pression entre la membrane et les pièces semi-cylindriques peut être modifiée en faisant varier les diamètres relatifs entre ces éléments. Par ailleurs, grâce à l'ajustage des paramètres précédents, on parvient, pour une certaine amplitude, à faire que l'amortissement soit maximal à une fréquence déterminée.

Le support de l'invention offre un comportement élastique quasi linéaire en cas de sollicitation externe en direction radiale puisque l'élastomère composant du noyau permet une déformation élastique qui fait que la relation entre le déplacement et la force exercée est quasi linéaire dans les premiers millimètres de la déformation par rapport à d'autres réalisations de support connues dans lesquelles ladite relation cesse d'être linéaire avec un faible déplacement.

A l'extrémité de fixation pour son application, le support est muni d'une portion crantée de matériau élastomère, adhérant à certains des renforts annulaires du noyau et disposée face à un élément extérieur uni à la douille intérieure du noyau, ce qui permet d'établir une butée axiale élastique en cas de déformation axiale importante, par exemple en cas de freinage brutal du véhicule d'application, évitant ainsi de détériorer les chambres contenant le liquide amortisseur.

Ledit support de l'invention résulte en une grande simplicité de construction : le noyau est une pièce à symétrie axiale qui s'obtient au moyen d'un procédé simple de moulage du matériau élastomère sur les anneaux de renfort et la douille cylindrique intérieure, la douille cylindrique tout comme les renforts annulaires étant des éléments faciles à se procurer, ainsi que la structure extérieure du support constituée d'un simple tube cylindrique de faible épaisseur, tandis que les pièces semi-cylindriques disposées sur le noyau présentent une géométrie simple qui peut être obtenue par moulage dans n'importe quel plastique ou matériau similaire.

Le montage de construction du support est lui-même très simple, puisque l'ensemble comprend seulement quatre pièces, à savoir le noyau, les deux pièces semi-cylindriques et la structure extérieure, lesquelles s'incorporent dans la disposition du montage dans le liquide amortisseur qui doit remplir les chambres et le conduit labyrinthique du support, de sorte qu'en fermant les extrémités de la structure sur les parties extrêmes du noyau, tout l'intérieur soit complètement rempli de liquide : l'incorporation de la structure et la fermeture des extrémités peut donc s'effectuer en une seule opération.

La fixation pratique du support sur le lieu d'application peut se réaliser au moyen d'une simple vis passée à travers la douille cylindrique intérieure du noyau, tandis qu'à l'extérieur le support possède également une forme cylindrique qui permet son montage facile sous pression sur n'importe quel type de logement circulaire, sans besoin d'utiliser de vis ou tout autre élément de fixation en raison de dimensions assez réduites permettant de l'incorporer dans des petits espaces. Par ailleurs, comme le support présente une symétrie axiale, il peut être monté avec une fixation externe sur une quelconque partie de sa longueur.

Par conséquent, ledit support objet de l'invention comporte assurément plusieurs caractéristiques très avantageuses, qui lui confèrent une existence propre et un caractère préféré par rapport aux supports élastiques actuellement connus du même type.
La figure 1 montre une vue explosée en perspective de l'ensemble composant du support préconisé.
La figure 2 est une vue en coupe longitudinale de l'ensemble du support monté, en position de repos.
La figure 3 est une vue de la section longitudinale du support dans une position basse, effet d'un effort axial.
La figure 4 est une vue de la section longitudinale du support en position basse, effet d'un effort radial.
La figure 5 est un graphique qui correspond à un essai du comportement statique de la rigidité radiale du support.
La figure 6 est un graphique qui correspond à un essai du comportement statique de la rigidité axiale du support.
La figure 7 est un graphique qui correspond à un essai du comportement de la rigidité dynamique axiale du support.
La figure 8 est un graphique qui correspond à un essai du comportement dynamique de l'angle de perte du support.

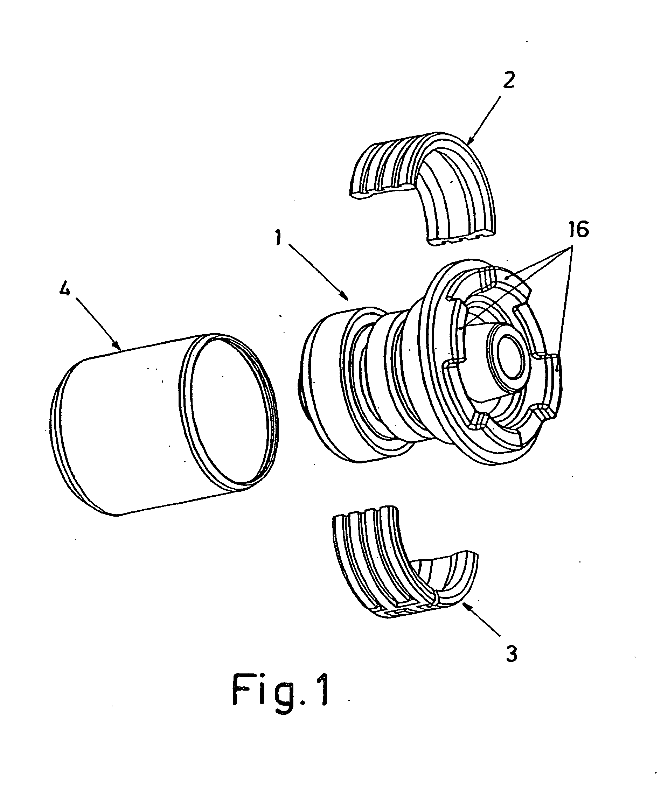

L'objet de l'invention est un support élastique à amortissement hydraulique, qui comporte, comme représenté sur la figure 1, un noyau (1), deux pièces semi-cylindriques complémentaires (2 et 3), et une structure cylindrique (4), à l'intérieur de laquelle est monté le noyau (1) sur lequel sont disposées les deux pièces semi-cylindriques.

Le noyau (1) se compose d'un matériau élastomère (5), lequel est moulé sur une douille cylindrique intérieure (6), incluant également deux renforts annulaires (7 et 8) encastrés dans le propre matériau élastomère (5) dans les zones situées aux extrémités.

Cet ensemble du noyau (1) détermine deux fentes annulaires (9 et 10), lesquelles sont définies dans la zone située entre les positions des deux renforts annulaires (7 et 8)et étant séparées par une membrane centrale (11) intermédiaire.

Les pièces semi-cylindriques (2 et 3) sont disposées en formant un anneau à l'extérieur du noyau (1), entre les renforts annulaires (7 et 8), de manière à ce qu'elles restent appuyées contre la membrane (11), fermant de manière périphérique les fentes (9 et 10), lesquelles forment ainsi des chambres annulaires isolées l'une de l'autre par la membrane (11).

Les pièces semi-cylindriques (2 et 3), ou tout au moins l'une d'elles, déterminent sur la partie extérieure, un canal labyrinthique (12), lequel communique par ses extrémités avec les chambres respectives (9 et 10) à travers plusieurs passages (13 et 14), de manière à ce qu'au moyen de la structure extérieure (4), ledit canal (12) reste couvert sur sa partie extérieure, formant un conduit qui communique par l'extérieur des pièces (2 et 3) avec les chambres (9 et 10).

Le montage de l'ensemble se réalise dans un liquide amortisseur, de façon à ce que l'intérieur des chambres (9 et 10) et du conduit labyrinthique (12) soit complètement rempli dudit liquide ; le montage se terminant avec la fermeture des extrémités de la structure extérieure (4) vers l'intérieur, de façon à ce que lesdites extrémités restent appuyées contre le noyau (1), la structure (4) assurant ainsi l'emballage de l'ensemble, tout en réalisant l'étanchéité qui empêche le liquide enfermé à l'intérieur de s'échapper.

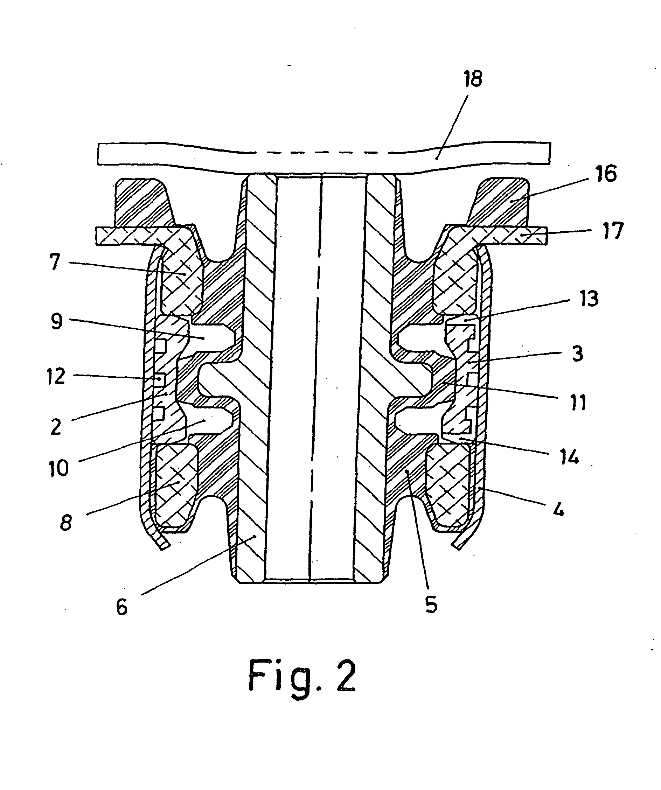

L'ensemble monté est comme représenté à la figure 2, c'est-à-dire qu'il comprend le noyau (1) à l'intérieur, et entre celui-ci et la structure extérieure (4) sont incluses les pièces (2 et 3) déterminant les chambres (9 et 10) séparées par la membrane (11) et communiquant entre elles par l'extérieur des pièces (2 et 3) à travers le conduit labyrinthique (12), l'intérieur des chambres (9 et 10) mentionnées et le conduit (12) étant totalement rempli de liquide amortisseur.

Dans cette disposition le matériau élastomère (5) du noyau permet une déformation élastique entre la douille intérieure (6) et les renforts annulaires (7 et 8) sur lesquels la structure extérieure (4) est appuyée au moyen d'une petite couche de matériau élastomère (5), de sorte que l'ensemble a un comportement élastique quasi linéaire en cas de sollicitation radiale, axiale, conique, de torsion, ou de la combinaison des précédentes.

La membrane (11) reste quant à elle en contact contre la partie intérieure des pièces (2 et 3) avec une certaine pression, établissant ainsi une séparation étanche entre les chambres (9 et 10), mais avec une liberté de déformation élastique et un glissement sur ledit appui.

La fixation du support pour son application pratique se réalise à travers la douille intérieure (6) et par la structure extérieure (4), via l'introduction d'une vis de fixation par la fente axiale de la douille (6) et en encastrant l'ensemble à l'intérieur d'un logement cylindrique dans lequel la structure (4) reste ajustée sous pression.

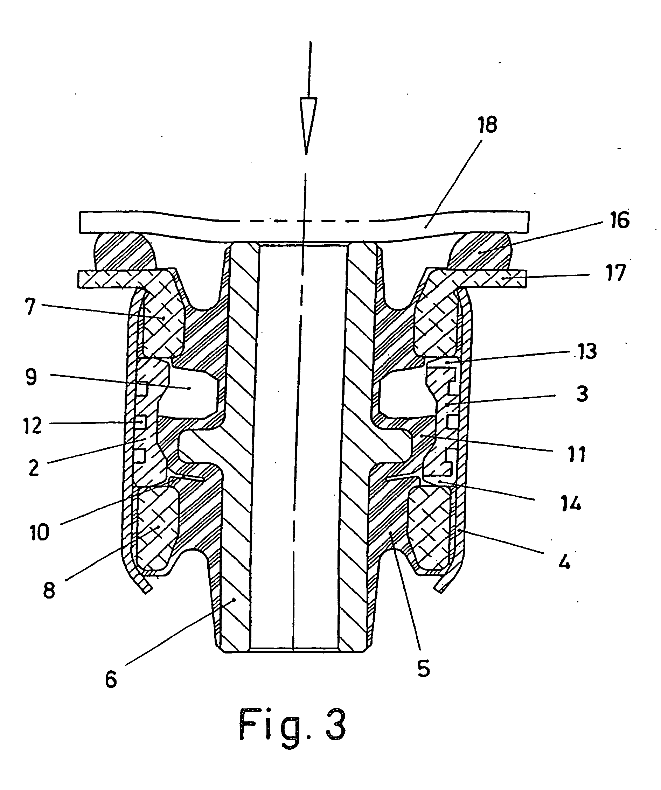

Dans cette disposition, le support est en mesure d'amortir efficacement la composante axiale en cas de mouvement ou vibration de la douille intérieure (6) par rapport à la structure extérieure (4), puisque le mouvement de la douille (6) se transmet à la charnière (11), provoquant une modification du volume des chambres (9 et 10) selon l'effort appliqué, augmentant le volume de l'une des chambres tout en diminuant celui de l'autre, comme cela est représenté à la figure 3.

La diminution du volume dans la chambre (10) qui se réduit provoque une augmentation de la pression dans ladite chambre (10), tandis que l'augmentation du volume dans la chambre (9) qui subit une expansion provoque une diminution de la pression dans cette chambre (9), les deux effets s'ajoutant pour créer une action de pompage du liquide contenu dans lesdites chambres (9 et 10), de la chambre (10) vers la chambre (9), à travers le conduit extérieur (12), de sorte que la section réduite et la géométrie labyrinthique dudit conduit (12) offrent une résistance au passage du liquide, ce qui se traduit par un amortissement de l'effort axial appliqué entre la douille (6) et la structure (4).

La membrane (11) est conçue de manière à rester, dans la disposition du montage, comprimée à une certaine pression entre les pièces (2 et 3), de sorte que les chambres (9 et 10) restent isolées l'une par rapport à l'autre, mais sans empêcher la déformation élastique du revêtement élastomère de ladite membrane (11) et son coulissement sur l'intérieur des pièces (2 et 3).

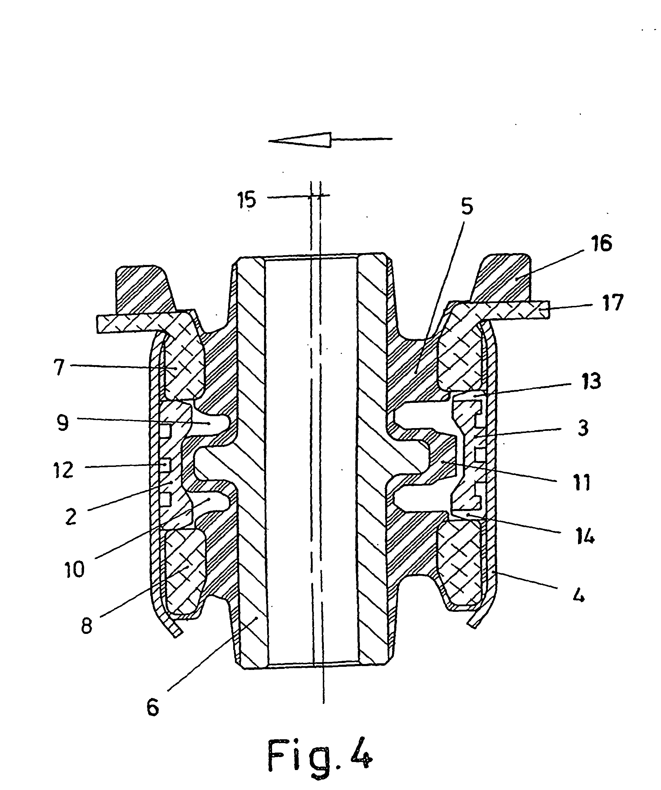

Par conséquent, le support élastique peut être soumis à des sollicitations du type radial, axial, conique ou de torsion jusqu'à un certain degré sans qu'une communication directe entre les deux chambres (9 et 10) ne se produise, tant qu'en cas de déplacement d'une douille intérieure (6) par rapport à la structure extérieure (4), en direction radiale, l'ajustement entre la membrane (11) et les pièces (2 et 3) augmente d'un côté et diminue de l'autre, de sorte que même si cet ajustement sur le contour est plus important que le déplacement radial de la douille (6), la membrane (11) puisse maintenir les deux chambres (9 et 10) isolées. Mais lorsque la douille (6) arrive à un certain déplacement radial (15), comme l'illustre la figure 4, le contour de la membrane (11) perd dans une zone le contact avec l'intérieur des pièces (2 et 3), produisant une communication directe entre les chambres (9 et 10), avec la disparition de l'effet amortisseur que produit le passage du liquide par le conduit (12) en conditions normales.

En arrêtant le déplacement radial de la douille (6) par rapport à la structure (4), la membrane (11) se remet en contact avec l'intérieur des pièces (2 et 3) sur l'ensemble du contour, interrompant la communication directe entre les chambres (9 et 10) et les laissant de nouveau communiquer uniquement par le conduit extérieur (12), avec lequel l'effet amortisseur est récupéré.

A une extrémité le noyau (1) incorpore une portion crantée (16) de matériau élastomère, qui peut être continue sur un contour circulaire avec des parties proéminentes séparées par des zones de hauteur moindre, ladite portion crantée (16) étant disposée sur une aile (17) du renfort annuaire (7) correspondant de ladite extrémité, tandis qu'un élément (18) en forme de disque, solidaire par rapport à la douille intérieure (6) s'incorpore à ladite extrémité, cet élément se trouvant à une certaine distance de la portion crantée (16).

Par conséquent, jusqu'à un certain degré de déplacement axial de la douille (6) par rapport à la structure (4), le support se comporte de la façon décrite précédemment, amortissant l'effort qui donne lieu à la déformation, mais lorsque la douille (6) arrive à un certain degré de déplacement axial par rapport à la structure (4), l'élément (18) fait tampon sur la portion crantée (16), ce qui augmente notablement la rigidité axiale, opposant une résistance beaucoup plus forte à la poursuite du déplacement axial de la douille (6), évitant grâce à cela de détériorer le matériau élastomère (5) qui configure les chambres (9 et 10).

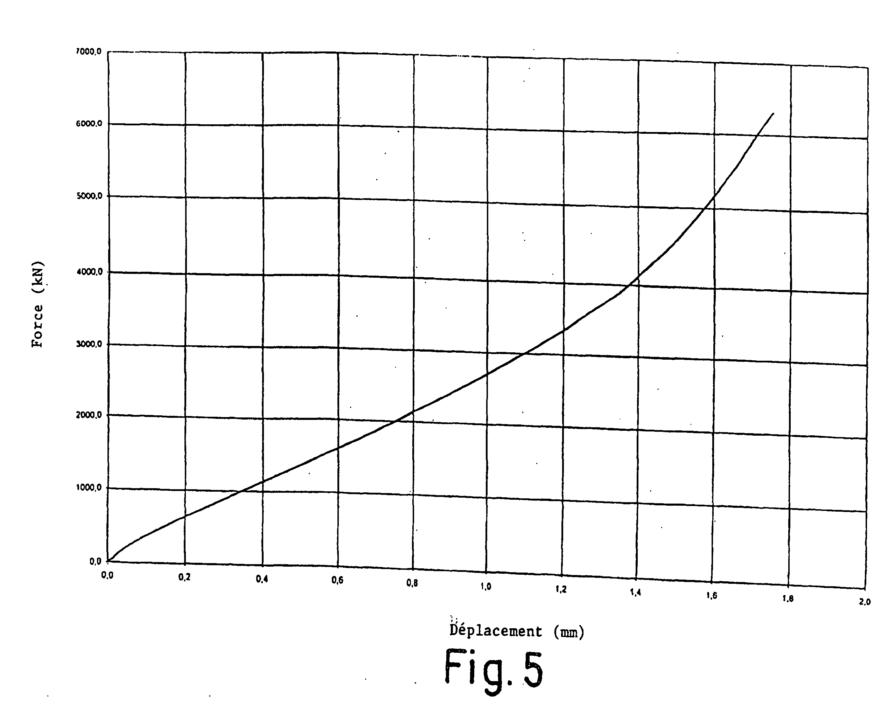

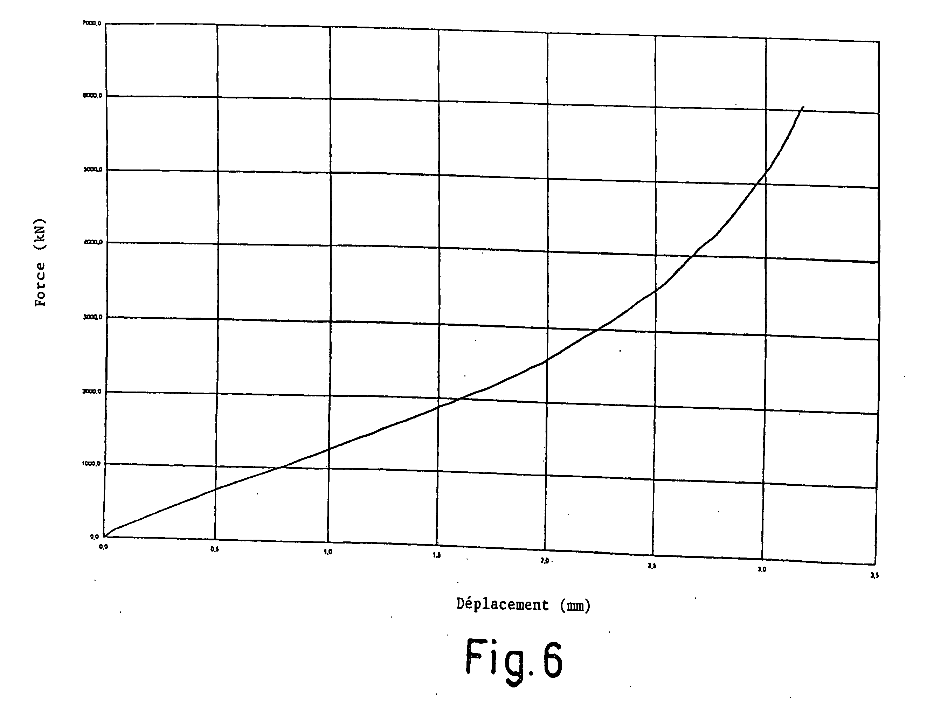

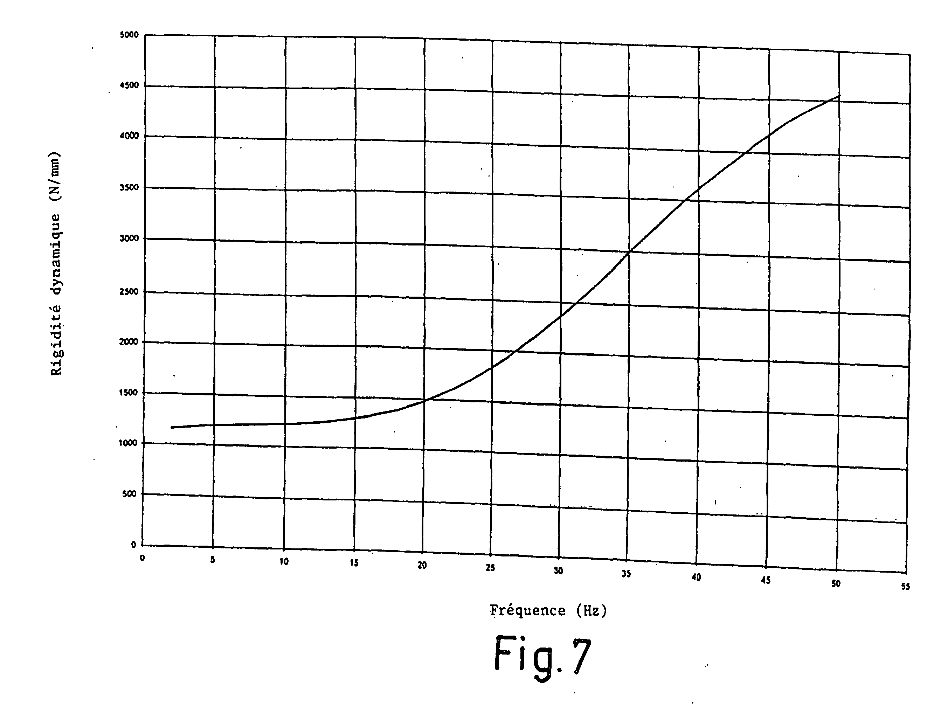

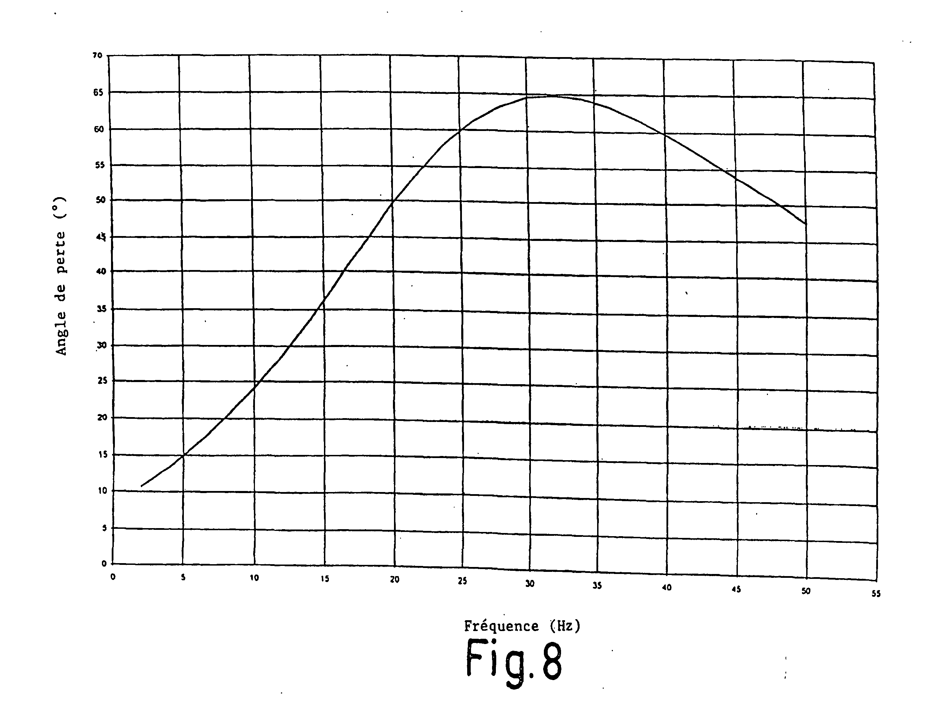

La fonctionnalité décrite est atteinte avec un support de réalisation très simple, dont l'ensemble de montage comprend uniquement le noyau moulé (1), les deux pièces semi-cylindriques (2 et 3) et la structure extérieure (4), formant un élément de dimension réduite, qui s'avère extrêmement avantageux pour l'installation pratique de son application, et avec lequel on obtient un comportement statique et dynamique avec des caractéristiques telles que celles indiquées aux figures 5, 6, 7 et 8, lesquelles ne sont pas obtenues dans de telles proportions avec les réalisations de support élastiques connues de la même application.

## Revendications

1. Support élastique à amortissement hydraulique du type comprenant un moyen intérieur et un moyen extérieur qui peuvent être mobiles selon un certain degré de déplacement élastique relatif l'un par rapport à l'autre, incluant deux chambres remplies d'un liquide qui peut passer de manière forcée entre ces chambres, ce support comprenant un noyau (1) formé par un matériau élastomère (5) moulé sur une douille cylindrique intérieure (6) et sur plusieurs renforts annulaires (7 et 8) situés périphériquement aux extrémités, le matériau élastomère (5) déterminant dans la zone médiane dudit noyau (1) située entre les renforts (7 et 8) deux fentes annulaires qui forment deux chambres (9 et 10), séparées par une membrane (11) intermédiaire couverte par le matériau élastomère (5), **caractérisé en ce que** deux pièces semi-cylindriques (2 et 3) sont disposées sur lesdites fentes et ferment le contour extérieur de ces dernières, ladite membrane (11) étant apte à rester appuyée périphériquement contre la partie intérieure desdites pièces (2 et 3) pour établir une séparation entre les deux chambres (9 et 10), une de ces pièces au moins définissant par sa partie extérieure un canal labyrinthique (12) dont les extrémités communiquent au moyen de passages respectifs (13 et 14) avec lesdites chambres, tandis qu'à l'extérieur est disposée une structure cylindrique (4) qui ferme périphériquement l'ensemble assurant le montage, cette structure cylindrique (4) déterminant avec le canal (12) un conduit de communication entre les chambres (9 et 10) par l'extérieur des pièces (2 et 3) ; et **en ce que** ladite membrane (11) permet un déplacement élastique de la douille intérieure (6) par rapport à la structuré extérieure (4), en direction radiale, et maintient la séparation entre les chambres (9 et 10) jusqu'à un certain degré de déplacement radial (15) de la douille (6), à partir duquel une zone du contour de la membrane (11) se sépare de l'intérieur des pièces (2 et 3) et laisse s'établir une communication directe entre les chambres (9 et 10).

2. Support élastique à amortissement hydraulique selon la revendication 1, **caractérisé en ce que** l'incorporation des pièces (2 et 3) sur le noyau (1) et l'introduction dudit ensemble dans la structure (4) se réalise dans un liquide amortisseur, par quoi le volume des chambres (9 et 10) et le conduit (12) dans l'ensemble monté sont complètement remplis.

3. Support élastique à amortissement hydraulique selon la revendication 1 ou 2, **caractérisé en ce que** ladite membrane (11) est apte à rester appuyée périphériquement avec une certaine pression contre la partie intérieure des pièces (2 et 3) pour établir une séparation entre les deux chambres (9 et 10), et avec une possibilité de déformation élastique et de coulissement dans l'appui sur l'intérieur desdites pièces (2 et 3).

4. Support élastique à amortissement hydraulique selon l'une quelconque des revendications 1 à 3, **caractérisé en ce qu'**à une extrémité, le noyau (1) comporte une portion crantée (16) en matériau élastomère incorporée sur le renfort annulaire (7) respectif de cette extrémité, tandis qu'un élément (18), en forme de disque s'incorpore solidairement sur l'extrémité de la douille intérieure (6), lequel reste à une certaine distance de la portion crantée (16), pour s'appuyer sur cette dernière lorsque le déplacement axial relatif de la douille (6) par rapport à la structure extérieure (4) dépasse cette distance qui sépare ledit élément (18) de la portion crantée (16).

## Patentansprüche

1. Hydraulisch gedämpftes elastisches Lager von der Art mit einem inneren Mittel und einem äußeren Mittel, die längs eines gewissen Maßes elastischer Verschiebung relativ zueinander beweglich sind, einschließlich zweier Kammern, welche mit Flüssigkeit gefüllt sind, die zwischen diesen Kammern unter Druck fließen kann, wobei das Lager einen Kern (1) umfasst, der aus einem Elastomer (5) gebildet ist, das auf eine zylindrische Innenhülse (6) und mehrere ringförmige Verstärkungen (7 und 8) aufgespritzt ist, die am Umfang an den Enden angeordnet sind, wobei das Elastomer (5) in dem zwischen den Verstärkungen (7 und 8) angeordneten mittleren Bereich des Kerns (1) zwei ringförmige Schlitze definiert, die zwei Kammern (9 und 10) bilden, die durch eine von dem Elastomer (5) bedeckte, dazwischenliegende Membran (11) getrennt sind,
**dadurch gekennzeichnet, dass** zwei halbzylindrische Stücke (2 und 3) auf diesen Schlitzen angeordnet sind und deren Außenrand abschließen, wobei die Membran am Umfang (11) an dem inneren Teil der Stücke (2 und 3) in Anlage zu bleiben vermag, um zwischen den beiden Kammern (9 und 10) eine Trennung herzustellen, wobei wenigstens eines der Stücke mittels seines äußeren Teils einen Labyrinthkanal (12) bildet, dessen Enden mittels entsprechender Durchlässe (13 und 14) mit den Kammern kommunizieren, während an der Außenseite eine zylindrische Struktur (4) angeordnet ist, welche die die Montage gewährleistende Einheit am Umfang abschließt, wobei die zylindrische Struktur (4) durch die Außenseite der Stücke (2 und 3) mit dem Kanal (12) eine Verbindungsleitung zwischen den Kammern (9 und 10) bildet, und dass die Membran (11) bezüglich der äußeren Struktur (4) eine elastische Verschiebung der Innenhülse (6) in radialer Richtung gestattet und bis zu einem gewissen Maß der radialen Verschiebung (15) der Hülse (6) die Trennung zwischen den Kammern (9 und 10) aufrechterhält, ab dem sich ein Bereich des Rands der Membran (11) von der Innenseite der Stücke (2 und 3) löst und eine direkte Verbindung zwischen den Kammern (9 und 10) entstehen lässt.

2. Hydraulisch gedämpftes elastisches Lager nach Anspruch 1,
**dadurch gekennzeichnet, dass** das Einfügen der Stücke (2 und 3) an dem Kern (1) und das Einsetzen der Einheit in die Struktur (4) in einer Dämpfungsflüssigkeit erfolgt, wodurch der Rauminhalt der Kammern (9 und 10) und die Leitung (12) in der montierten Einheit vollständig gefüllt werden.

3. Hydraulisch gedämpftes elastisches Lager nach Anspruch 1 oder 2,
**dadurch gekennzeichnet, dass** die Membran (11) am Umfang mit einem bestimmten Druck an dem inneren Teil der Stücke (2 und 3) in Anlage zu bleiben vermag, um zwischen den beiden Kammern (9 und 10) eine Trennung herzustellen, mit der Möglichkeit einer elastischen Verformung und eines Gleitens an der Anlage an der Innenseite der Stücke (2 und 3).

4. Hydraulisch gedämpftes elastisches Lager nach einem der Ansprüche 1 bis 3,
**dadurch gekennzeichnet, dass** der Kern (1) an einem Ende ein Kerbstück (16) aus Elastomermaterial aufweist, das an der jeweiligen ringförmigen Verstärkung (7) dieses Endes eingefügt ist, während sich ein Element (18) in Form einer Scheibe fest an dem Ende der Innenhülse (6) einfügt, das in einem gewissen Abstand zu dem Kerbstück (16) bleibt, um an dieses zu stoßen, wenn die relative axiale Verschiebung der Hülse (6) bezüglich der äußeren Struktur (4) diesen Abstand überschreitet, der das Element (18) von dem Kerbstück (16) trennt.

## Claims

1. Resilient support with hydraulic damping of the type comprising an inner means and an outer means that can be movable by a certain degree of relative elastic displacement with respect to each other, including two chambers filled with a liquid that can pass in a forced manner between these chambers, this support comprising a core (1) formed by an elastomeric material (5) moulded over an inner cylindrical bushing (6) and over several annular reinforcements (7 and 8) situated peripherally at the ends, the elastomeric material (5) determining, in the middle area of said core (1) situated between the reinforcements (7 and 8), two annular slots that form two chambers (9 and 10), separated by an intermediate membrane (11) covered by the elastomeric material (5), **characterised in that** two semicylindrical parts (2 and 3) are arranged on said slots and close the outer contour of the latter, said membrane (11) being able to remain pressed peripherally against the inner portion of said parts (2 and 3) in order to establish a separation between the two chambers (9 and 10), at least one of these parts defining, by means of its outer portion, a labyrinthine canal (12), the ends of which communicate by means of respective passages (13 and 14) with said chambers, whilst outside there is arranged a cylindrical structure (4) that peripherally closes the assembly providing the mounting, this cylindrical structure (4) determining, together with the channel (12), a communication conduit between the chambers (9 and 10) via the outside of the parts (2 and 3); and **in that** said membrane (11) allows an elastic displacement of the inner bushing (6) with respect to the outer structure (4), in the radial direction, and maintains the separation between the chambers (9 and 10) up to a certain degree of radial displacement (15) of the bushing (6), on the basis of which an area of the contour of the membrane (11) separates from the inside of the parts (2 and 3) and allows a direct communication to be established between the chambers (9 and 10).

2. Resilient support with hydraulic damping according to Claim 1, **characterised in that** the incorporation of the parts (2 and 3) on the core (1) and the introduction of said assembly in the structure (4) is effected in a damping liquid, by means of which the volume of the chambers (9 and 10) and the conduit (12) in the mounted assembly are completely filled.

3. Resilient support with hydraulic damping according to Claim 1 or 2, **characterised in that** said membrane (11) is able to remain pressed peripherally with a certain pressure against the inner portion of the parts (2 and 3) in order to establish separation between the two chambers (9 and 10), and with a possibility of elastic deformation and sliding in the abutment on the inside of said parts (2 and 3).

4. Resilient support with hydraulic damping according to any one of Claims 1 to 3, **characterised in that**, at one end, the core (1) comprises a notched portion (16) made from elastomeric material incorporated on the respective annular reinforcement (7) of this end, whilst a disc-shaped element (18) is incorporated integrally on the end of the inner bushing (6), which remains a certain distance away from the notched portion (16) in order to bear on the latter when the relative axial displacement of the bushing (6) with respect to the outer structure (4) exceeds this distance that separates said element (18) from the notched portion (16).
